# EUROPEAN PATENT APPLICATION

(11) **EP 4 239 513 A1**
(43) Date of publication of application: **06.09.2023**
(21) Application number: 22315046.7
(22) Date of filing: 03.03.2022
(51) Int. Cl.: G06F 30/18, G06T 7/00, G06T 7/162, G06V 10/70, G06F 113/14

(54) **METHOD FOR GENERATING A DIGITAL TWIN OF A FACILITY**

(71) Applicant: SAMP, 75020 Paris (FR)
(72) Inventor: BOURGOUIN, Laurent, 75020 Paris (FR); SHAH, Shivani, 94200 Ivry-sur-Sein (FR); DELARUE, Guillaume, 92150 Suresnes (FR); ABOU BAKR, Nachwa, 38000 Grenoble (FR); TOUFAN, Chayan, 75018 Paris (FR); LANDRIEU, Loic, 75020 Paris (FR)
(74) Representative: Oak & Fox

(57) **Abstract**

Method for automatically generating an augmented digital mapping of a facility, the method comprising the following steps:
• Receiving (REC1) a first digital map representing a diagram of the facility and comprising a set of symbols and a set of graphical connections;
• Detecting (Dsym) at least one symbol on the first digital map and using said at least one symbol as an input of a first learning function in order to classify said at least one symbol in a classifier;
• Generating (GEN₂) a first connectivity graph based on the data stored in the first data file;
• Receiving (REC₂) a second digital map of the facility;
• Segmenting (SEG) the second digital map into partitions;
• Generating (GEN₃) a second connectivity graph;
• Automatically generating an augmented digital mapping of the facility by aligning the first connectivity graph and the second connectivity graph.

## Description

### FIELD

The invention relates to the field of three-dimensional model generation methods. In particular, the invention relates to the field of three-dimensional model generation methods implementing machine learning algorithms.

### BACKGROUND

In order to ensure proper functioning of a facility, interventions on site must be regularly scheduled. Such interventions may occur for preventive purposes, or to fix one or several deficient equipment on site. In that purpose, it is essential for the operators to have a precise knowledge of the equipment of the facility, and of their conditions before their intervention. Not only this knowledge is useful to ensure that the operators will be able to operate in an efficient way, but it also may have a significant impact in reducing the risk of accidents on site.

As for today, most operators have to prepare their intervention by using two dimensional schematics of the facility. A first problem with such two-dimensional schematics is that they do not provide the operator with a realistic representation of the equipments in the facility. Another problem with the two-dimensional schematics is that there is a risk that the documents are outdated and that modifications within the equipment and their connectivity have been made over time. Consequently, the operator may not have all the useful information he will need to prepare his intervention on site.

There already exist methods in the prior art for providing a more realistic representation of the equipment of a facility.

For example, patent application WO2021058084 discloses a method for generating a digital twin of a system or device. However, such a method does not allow merging information from two-dimensional schematics with a three-dimensional representation of the equipment of a facility in order to get a realistic representation of the facility and of the equipment, their connectivity, and their interactions.

It is an objective of the present invention to provide a method for generating a digital twin of a facility which contains every useful information an operator may require to prepare his intervention on site. It is another objective of the present invention to provide a method for generating a digital twin of a facility based on two-dimensional information relative to the equipment of said facility.

It is another objective of the invention to provide a method for generating a digital twin of a facility in a simpler manner than described in the prior art.

### SUMMARY

According to a first aspect, the invention relates to a computer implemented method for automatically generating an augmented digital mapping of equipment of a facility, the method comprising:
- Receiving a first digital map representing a diagram comprising a set of symbols representing equipments of the facility and a set of graphical connections being each connected by one end to at least one symbol among said set of symbols;
- Detecting at least one symbol on the first digital map and using said at least one symbol as an input of a first learning function for classifying said at least one symbol in a classifier;
- Detecting at least one text sequence proximate to the at least one symbol detected on the first digital map using a first image processing function ;
- Detecting at least one graphical connection connected by one end to at least one detected symbols on the first digital map using a second image processing function ;
- Associating each symbol with at least one detected text sequence and with at least one detected graphical connection when said connection exists;
- Generating a first data file storing the classified symbols, their associated text sequences and their associated graphical connections;
- Generating a first connectivity graph from the data stored in the first data file ;
- Receiving a second digital map of the facility, said second digital map comprising a 3D view of equipment of the facility ;
- Segmenting the second digital map into partitions, each partition representing at least one part of at least one 3D object;
- Performing a step of semantic identification on the second digital map to detect classes of the partitions using a second learning function and associating each partition to a detected class using said second learning function;
- Building connections between at least two 3D objects according to a criterion of proximity between said at least two 3D objects;
- Generating a second connectivity graph comprising all the partitions and their connectivity;
- Associating each symbol identified on the first digital map to at least one partition ;
- Automatically generating an augmented digital mapping of equipment of the facility by using a function of graph alignment to align the first connectivity graph and the second connectivity graph.

One advantage is to generate a realistic three-dimensional representation of the equipment of the facility comprising all the information extracted from the first digital map.

In one embodiment, the first digital map comprises a Process and Instrumentation Diagram and wherein at least one graphical connection represents a pipe and said at list one graphical connection connects one symbol with another symbol and/or is connected with another graphical connection to form a node.

One advantage is to be able to map numerous useful data represented on the Process and Instrumentation diagram within the three-dimensional representation of the equipment of the facility.

In one embodiment, at least one text sequence is automatically associated with at least one symbol according to a first predefined configuration based on a parameter of a minimal distance separating said at least one symbol from said at least one text sequence.

One advantage is to detect precisely information characterizing the equipment represented by the symbols and to associate this information with each symbol in a precise way.

In one embodiment, at least one text sequence is automatically associated with one symbol according to a second predefined configuration based on a parameter of position of the text sequence relative to said symbol.

One advantage is to ensure that a text sequence represented on the first digital map is associated with the equipment on which the text sequence is meant to provide information.

In one embodiment, the first image processing function is an optical character recognition function and wherein the second image processing function allows identifying parts of the first digital map that match at least one template.

One advantage is to precisely detect the text sequences and the connectivity between symbols on the first digital map.

In one embodiment, the first learning function comprises a neural network trained by a few-shots learning method.

One advantage is to be able to train the neural network with a limited amount of data.

In one embodiment, the second digital map comprises a point cloud from a three-dimensional laser scan and each 3D object represents an equipment of the facility and the connection between at least 3D objects are obtained by building a skeleton through several points of said point cloud.

One advantage is to build a precise representation of the connections between the partitions or the three-dimensional objects on the second digital map.

In one embodiment, the second learning function comprises a convolutional neural network trained by a supervised method and the second digital map is automatically segmented into partitions using said second learning function.

One advantage is to precisely identify all the different 3D objects or part of 3D objects on the second digital map.

In one embodiment, the second digital map is automatically postprocessed in order to identify additional points that belong to at least one segmented partition.

One advantage is to identify gaps or missing connectivity between points or 3D objects on the second digital map.

In one embodiment, a value of similarity between the first connectivity graph and the second connectivity graph is automatically measured using graph edit distance.

One advantage is to be able to associate more precisely the information detected on the first digital map with the three-dimensional representation of the equipment of the facility.

According to another aspect, the invention relates to a system for automatically generating an augmented digital mapping of a facility comprising a device for receiving a first digital map representing a diagram of the facility, said first digital map comprising a set of symbols representing equipment of the facility and a set of graphical connections being connected by one end to at least one symbol and for receiving a second digital map representing at least one 3D object of the facility and said system comprising at least one memory and at least one calculator configured for:
- Detecting at least one symbol on the first digital map and using said at least one symbol as an input of a first learning function in order to classify said at least one symbol in a classifier;
- Detecting at least one text sequence proximate to the at least one symbol detected on the first digital map using a first image processing function ;
- Detecting at least one graphical connection connected by one end to at least one detected symbols on the first digital map using a second image processing function ;
- Associating each symbol with at least one detected text sequence and with at least one detected graphical connection when said connection exists;
- Generating a first data file storing the classified symbols, their associated text sequences and their associated graphical connections;
- Generating a first connectivity graph based on the data stored in the first data file;
- Segmenting the second digital map into partitions, each partition representing at least one part of at least one 3D object;
- Performing a step of semantic identification on the second digital map to detect classes of the partitions using a second learning function and associating each partition to a detected class using said second learning function ;
- Building connections between at least two 3D objects according to a criterion of proximity between said at least two 3D objects ;
- Generating a second connectivity graph comprising all the partitions and their connectivity;
- Associating each symbol identified on the first digital map to at least one partition obtained by segmenting the second digital map,
- Automatically generating an augmented digital mapping of the facility by using a function of graph alignment to align the first connectivity graph and the second connectivity graph.

In one embodiment, the system comprises a user interface and a display device comprising a screen to display the augmented digital mapping of the facility.

According to another aspect, the invention relates to a computer program comprising instructions which, when the program is executed by a computer, cause the computer to carry out any of the steps of the method according to the first aspect of the invention.

### BRIEF DESCRIPTION OF THE DRAWINGS

Other features and benefits that characterize embodiments of the present invention will be apparent upon reading the following detailed description and reviewing the associated drawings which illustrate:
[Fig. 1]: Steps of the method for automatically generating an augmented digital mapping of a facility.
[Fig. 2]: Steps for detecting the symbols, text sequences and graphical connections on the first digital map when said first digital map comprises a process and instrumentation diagram.
[Fig. 3]: Steps for generating a first connectivity graph from an input digital map when it comprises a process and instrumentation diagram.
[Fig. 4]: A step of receiving the second digital map when it comprises a point cloud of equipment of a facility.
[Fig. 5]: A step of generating a first connectivity graph from a first data file comprising data from the first digital map.
[Fig. 6]: A step of generating a second connectivity graph from the second digital map.
[Fig. 7]: A step of aligning the first and the second digital map to generate an augmented digital mapping of equipment of the facility.
[Fig. 8]: A hardware configuration of the system of the invention.

### DETAILED DESCRIPTION

The invention relates to a method for automatically generating an augmented digital mapping 100 of a facility 101. The augmented digital mapping 100 may be a representation of various types of facilities such as power plants, refineries, chemical plants, water treatment plants and so on.

### DEFINITIONS

Below are some definitions of the terms that are used in the present description:
The term "first digital map" refers to a two-dimensional representation of equipment of a facility and of their connectivity.

The term "equipment" refers to any industrial object of the facility. The equipment may be of various types such as, but not limited to, pipes, valves, motors, pumps, heat exchanger, sensors, vessels, instruments. The term "equipment" may refer to any industrial object represented by a symbol or by a line on a first digital map, such as a process and instrumentation diagram.

The term "graphical connections" refers to the links between symbols on the first digital map. The term "graphical connection" may refer to a representation of any kind of mechanical connection between equipment. The graphical connection may also represent other types of links between equipment, such as electrical connections through wires or wireless connection for data exchange. In some cases, a graphical connection may refer to a representation of a pipe connected to one or several equipment. Thus, a representation of a pipe may be designed by the term "symbol" or by the term "graphical connection" depending on the case.

The augmented digital mapping 100 may comprise a three-dimensional representation of equipment of the facility 101 and information associated to that equipment such as for example name of the equipment, tag numbers or dimension of the equipment. The augmented digital mapping 101 may be accessible through a dedicated user interface, for example through a web platform. For example, a user may access real time information on a specific equipment of the facility 101 by clicking on said specific equipment through the dedicated user interface. The augmented digital mapping 100 may be useful to professionals, for example in order to schedule maintenance operations and simplify the on-site intervention of an operator by providing him with all the useful information relative to the facility.

The following description gives exemplary embodiments of the method for generating the augmented digital mapping 100 of a facility 101 and of a system for generating the augmented digital mapping 100 of a facility 101. Various alternatives are described for all the embodiments in the present description. Those alternatives may be applicable to each described embodiment. Thus, the characteristics described in one embodiment may be directly applicable to another embodiment. The invention protects the combination of characteristics described through all embodiments.

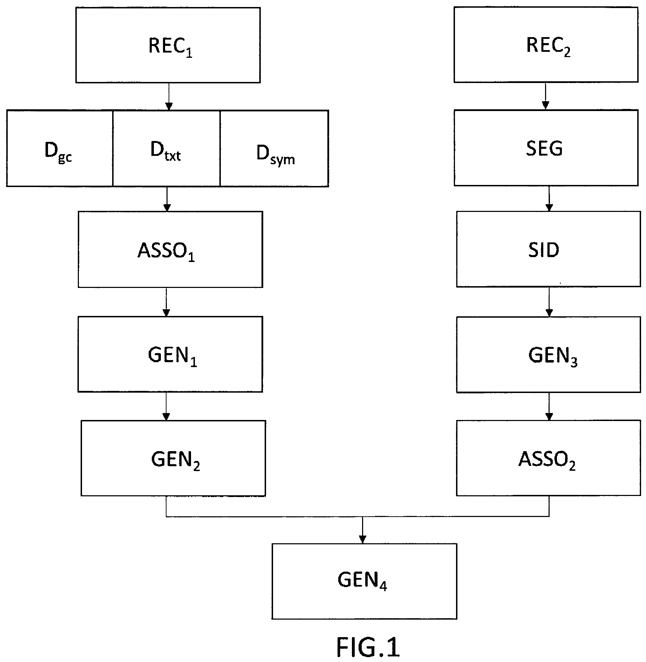

Figure 1 is an example of implementation of the method of the invention through several steps in order to achieve the generation of the augmented digital mapping 100 of the facility 101.

### First digital map - 2D part

In reference to figure 1, the method to generate the augmented digital mapping comprises a step noted REC₁ of receiving a first digital map 10 of the facility 101. The first digital map 10 received may consist in a .pdf file, a .png file or a .jpg file. More generally, the first digital map 10 may consist of any kind of image independently of a specific format.

The first digital map 10 represents a diagram of the facility 101. "A diagram of the facility" refers to a graphical representation of equipment of the facility 101 and of their connectivity. The "connectivity" of equipment refers to any means of connection between equipment, such as mechanical connections, pipes linking equipment for the circulation of a fluid, or communication means between equipment, for example for exchanging data.

For example, the first digital map 10 may represent a hydraulic installation of the facility 101. In that case, the connectivity between equipment may be represented on the first digital map 10 by pipes linking the equipment together.

More generally, the received first digital map 10 can comprise any kind of scheme of an installation or part of an installation of the facility 101 on which physical connections or communication between equipment is represented. For example, the first digital map 10 may comprise an electric scheme.

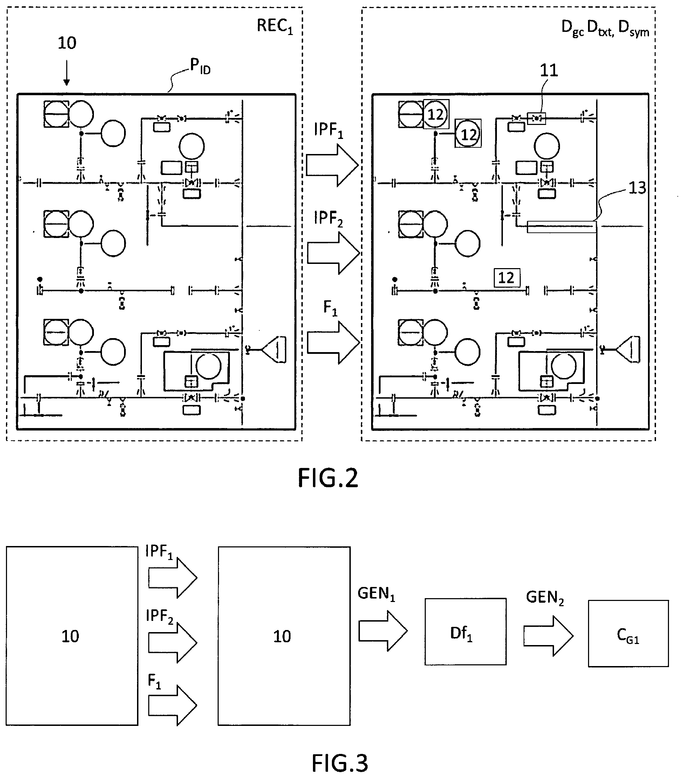

In one embodiment, the first digital map 10 comprises a process and instrumentation diagram P_{ID}. Such a diagram shows the interconnection of process equipment together with the instrumentation and control devices. One example of such a diagram is illustrated on figure 2. The received diagram is illustrated on the left portion of the figure.

### Detecting symbols on the first digital map

In reference to figure 2, the method comprises a step of detecting D_{sym} at least one symbol 11 on the first digital map 10. By "detecting at least one symbol", it should be understood that a plurality of symbols 11 may be detected on the first digital map 10. The method allows detecting all the symbols 11 that are represented on the first digital map 10.

The symbols 11 may be a graphical representation of equipment of the facility 101. The symbols 11 may represent various type of equipment of the facility 101 such as, but not limited to, sensors such as temperature or flow sensors, mechanical equipment such as pumps, transmitters, controllers, motors, regulators, vessels, pumps, valves such as in-line valves, gate valves, needle valves three ways valves, butterfly valves, relief valves, angle valves, globe valves.

The symbols 11 may also represent discrete instruments which are instruments separate from other instruments in a process. The set of symbols 11 may also represent computer functions or programmable logic control.

In one embodiment, the step of detecting at least one symbol 11 on the first digital map 10 comprises the detection of lines linking at least two symbols 11 together. In that case, the lines which may represent pipes linking equipment together may be detected as symbols 11 on the first digital map 10.

In one embodiment, the step of detecting at least one symbol 11 on the first digital map 10 comprises a step of building a bounding box around said detected symbol 11. The bounding box may for example have a shape of a rectangular box surrounding the outline of a symbol 11, as illustrated on the right portion of Figure.2.

### First learning function

The detected symbols 11 are used as an input of a first learning function F₁. The first learning function F₁ is used to classify the detected symbols 11 in a classifier.

In one embodiment, the learning function F₁ comprises a neural network. The neural network is for example a combination of convolutional neural networks and recurrent neural networks. An example of such neural network is a region based convolutional neural network, also designated by the appellation "R-CNN". The neural network may comprise several layers among the following: convolutional layers, pooling layers, dropout layers, fully connected layers also known as dense layers, SoftMax layers, output layers.

In one embodiment, the first learning function F₁ implements a deep learning method. The first learning function F₁ may for example implement a Fast RCNN, a Faster RCNN, a mask RCNN or a YOLO algorithm.

In one embodiment, the first learning function F₁ implements a supervised method. In that case, the first learning function F₁ may be trained by receiving labeled input data. For example, such labeled input data could comprise labeled representation of equipment on a diagram in order to train a neural network to recognize and distinguish different symbols 11 or graphical connections 13 on a first digital map 10.

In one embodiment, the first learning function F₁ is trained by means of a few-shots learning method. It should be understood by a "few shots learning method" that the learning function F₁ is trained using a small amount of data. One example of a few shots learning method is a method implementing a Siamese network. Such network is also designated by the appellation "twin neural network" in the literature. Such a network may contain one or more identical networks.

One advantage of using a few shots learning method is to allow to have a dictionary of symbols 11 which can be customized for new classes of symbols 11.

In one embodiment, the method comprises a step of preprocessing the first digital image 10 before using it as an input of the first learning function F₁. The first digital image 10 may for example be downsized before it is used as an input of the first learning function F₁. The first digital map 10 may also be preprocessed to emphasize parts of the diagram to optimize the detection of the symbols 11, graphical connections 13 and text sequences 12.

### Detecting graphical connections on the first digital map

The method comprises a step of detecting D_{GC} at least one graphical connection 13 on the first digital map 10. By "detecting at least one graphical connection", it should be understood that a plurality of graphical connections 13 can be detected on the first digital map 10. More generally, the method allows detecting all the graphical connection 13 between symbols 11 on the first digital map 10.

The detected graphical connections 13 represent the connectivity between the equipment. Each graphical connection 13 is connected to at least one symbol 11 by one end on the first digital map 10. Such graphical connections 13 may be referred to as "lines" in some diagrams, for example in a process and instrumentation diagram P_{ID}. One graphical connection 13 detected may be connected to another graphical connection 13 to form a node on the first digital map 10. In that case, the designation "graphical connection" may refer to the plurality of graphical connection 13 connected together to connect several equipment together, or to a graphical connection 13 connecting an equipment with another graphical connection 13, for example two pipes connected together.

In one embodiment, the method comprises a step of detecting a set of graphical connections 13 comprising lines representing pipes of an installation of the facility 101. The graphical connections 13 represent for example standard pipes or insulated pipes. The set of graphical connection 13 may also represent other kinds of connection such as mechanical connections between equipment, instrument impulses or electrical impulses.

The graphical connections 13 are detected on the first digital map 10 using a second image processing function IPF₂. The second image processing function IPF₂ may implement a function for finding parts of the digital map 10 that match a template image. For example, the template image may be an image of a line and the second image processing function IPF₂ may be able to detect lines on the first digital map 10 based on that template image.

In one embodiment, each graphical connection 13 on the first digital map 10 represents a pipe connecting one symbol 11 with another one.

In one embodiment, the step of detecting at least one graphical connection 13 on the first digital map 10 comprises a step of building a bounding box around said detected graphical connection 13. The bounding box may be of rectangular shape. The bounding box may frame only a portion of the graphical connection 13, as illustrated on the right portion of Figure.2.

### Detecting text sequences on the first digital map

The method comprises a step of detecting Dtxt at least one text sequence 12 on the first digital map 10. The text sequences may give information about equipment of the facility 101 represented by symbols 11. In that case, the text sequences 12 may be located inside the symbols 11 or nearby. The text sequences 12 may comprise a serial number, a tag number, a name, or a dimension of an equipment. The text sequences 12 may also comprise labels indicating properties of the lines. The text sequences 12 may for example include codes indicating diameter of pipes, indication on a fluid carried out by the pipes, indication on materials composing the pipes, or information on the type of insulation of the pipes.

The text sequences 12 may be associated to a specific graphical connection 13. In that case, the text sequence 12 may be located nearby the specific graphical connection 13. The text sequences 12 may also comprise identification letters. Such identification letters describe the parameters one given equipment is intended to control or provide information about. Examples of such identification letters are the identification letters "TI" to refer to a "temperature indicator", the identification letters "PC" to refer to a "pressure controller", and so on.

At least one text sequence 12 is detected on the first digital map 10 by means of a first image processing function IPF₁.

In one embodiment, the first image processing function IPF₁ comprises a method implementing optical character recognition. Such methods are commonly referred to as "OCR methods" in the literature. An example of such a method is the "easy OCR method".

In one embodiment, the method comprises a step of processing the first digital map 10 in order to extract the text sequences 12 in a separated data file. The separated data file is for example a .xml file. The text sequences 12 are for example extracted to the data file along with the detected symbols 11 and along with the detected graphical connection 13 in the data file.

### Associating symbols with text sequences & graphical connections

The method comprises a step of associating each symbol 11 with at least one detected text sequence 12. Such association may be performed according to several configurations.

In one embodiment, according to a first configuration CONF₁, at least one text sequence 12 is associated with a symbol 11 or a graphical connection 13 based on a parameter of minimal distance between said text sequence 12 and said symbol 11 or said graphical connection 13. In that case, the text sequence 12 may be associated with the symbol 11 or the graphical connection 13 closest to said text sequence 12. The minimal distance between a text sequence 12 and a symbol 11 may be calculated by building bounding boxes around the text sequences 12 and the symbols 11. In that case, the association between a text sequence 12 and a symbol 11 or a graphical connection 13 may be made based on the minimal distance separating two bounding boxes.

In one embodiment, at least one text sequence 12 is associated with a symbol 11 according to a second configuration CONF₂ wherein the text sequence 12 is located inside said symbol 11. In that case, the text sequence 12 may be associated with a symbol 11 by detecting that the text sequence 12 is surrounded by the outline of the symbol 11.

The method comprises a step of generating GEN₁ a first data file D_{f1} The detected symbols 11, their associated text sequences 12 and their associated graphical connections 13 are stored in the first data file D_{f1}.

For example, the first data file D_{f1} may consist in a .xml file storing all the information detected on the first digital map 10. The first data file D_{f1} may store all the detected information along with the relation between the different information detected. For example, information relative to the connectivity between the symbols 11 may be stored in the first data file D_{f1}.

In one embodiment, the first data file D_{f1} stores all the symbols 11 classified according to the output classification of the first learning function F₁. In that case, the first data file D_{f1} may store the detected symbols 11 associated with the classes, along with their associated text sequences 12 and associated graphical connections 13.

In one embodiment, the first data file D_{f1} generated comprises a classification of all the detected symbols 11, text sequences 12 and graphical connection 13. The symbols 11 are for example classified according to the output classification of the first learning function F₁. The symbols 11 may be classified according to classes divided in subclasses. Such classes may comprise general classes for equipment, such as "pumps, "vessels", "instruments", "valves", "pipes" and so on. In that case, the subclasses of the classification aim at being more precise on the type of equipment, for example on the type of valve or on the type of pipe detected.

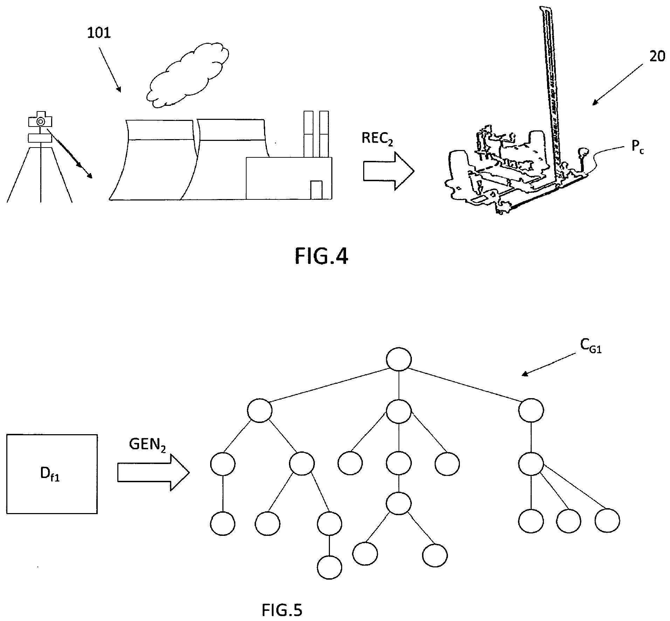

In reference to figure 3 and figure 5, the method comprises a step of generating GEN₂ a first connectivity graph C_{G1}. The first connectivity graph C_{G1} is generated from the data stored in the first data file D_{f1}. The first connectivity graph C_{G1} is a graphical representation of the connection between symbols 11, text sequences 12 and graphical connection 13 detected on the first digital map 10. The first connectivity graph C_{G1} aims at representing the connectivity between all the elements detected on the first digital map 10. The symbols 11 may be represented as nodes on the first connectivity graph C_{G1}.

In one embodiment, the graphical connections 13 are also represented as nodes on the first connectivity graph C_{G1}. In that case, the first connectivity graph C_{G1} may represent the connection between the symbols 11 and the graphical connection 13 with a connection between the nodes. For example, the first connectivity graph C_{G1} may comprise a node representing an equipment and a node representing a pipe. In that case, if the two nodes are linked together, it means that the pipe is connected with the equipment in the installation.

One advantage of generating the first connectivity graph C_{G1} is to allow mapping the information detected on the first digital image 10 with another graph, by merging the two graphs together.

### Receiving the second digital map - 3D part

In reference to figure 4, the method comprises a step of receiving REC₂ a second digital map 20 of the facility. The second digital map 20 represents a 3D view of equipment of the facility 101. The equipment of the facility 101 are also referred to as "3D objects" in the present description.

In one embodiment, the second digital map 20 comprises a point cloud. Such point cloud may come from a laser scan of the facility 101.

### Second digital map - segmentation

The method comprises a step of segmenting SEG the second digital map 20 into partitions. The partitions are also referred to as 3D objects or part of 3D objects in the present description. Thus, the partitions may represent one equipment of the facility 101, or at least a part of an equipment of the facility 101. The partitions may also represent pipes connecting equipment of the facility together, for example in the case of a hydraulic installation.

This step of segmentation should be understood as the step wherein the second digital map 20 is segmented into small clusters. Each cluster may represent at least a part of an equipment of the facility 101. For example, during this step, any geometrically similar area of the second digital map 20 may be converted into a partition.

In one embodiment, the step of segmentation is performed by using the second digital map 20 as an input of a second learning function F₂.

In one embodiment, the second learning function F₂ implements a deep learning method. The first learning function F₁ may for example implement a Fast RCNN, a Faster RCNN, a mask RCNN or a YOLO algorithm.

In one embodiment, the second learning function F₂ implements a supervised method. In that case, the second learning function F₂ may be trained by receiving labeled input data. For example, the labeled input data can comprise a labeled point cloud representation of equipment of the facility 101.

In one embodiment, the second learning function F₂ implements an unsupervised method. In that case, the second learning function F₂ may be trained by receiving non labelled input data. The non-labeled input data may comprise a non-labeled point cloud of the facility 101. The unsupervised method may implement clustering in order to group unlabeled data based on similarity of differences between said unlabeled data. The unsupervised method may also implement exclusive clustering. In that case, each point on the second digital map 20 belongs exclusively to one cluster. For example, each point on the second digital map 20 may be associated with only one class, for example the class "valves". In other cases, the unsupervised method may implement non-exclusive clustering. In that case, points of the second digital map can be part of more than one cluster. For example, one point on the point cloud may be part of several partitions.

In one embodiment, the second learning function F₂ is trained by means of semi-supervised learning. It should be understood by "semi-supervised learning" that the second learning function F₂ is trained using input data that are partially annotated.

In one embodiment, the second learning function F₂ implements a Sparse Convolution based model.

One advantage is to process the sparse data of a point cloud more efficiently.

The second learning function F₂ may learn association between equipment detected on the second digital map 20. For example, the second learning function F₂ may learn that several specific equipment has a certain probability of being located in the same area or of being connected with each other. The second learning function F₂ may for example associate a specific group of 3D objects to a specific class. The second learning function F₂ may for example calculate a probability of presence of another 3D object when a specific 3D object or a specific group of 3D objects are detected.

In one embodiment, the proximity between at least two 3D object is calculated by building bounding boxes around the 3D object and calculating the minimal distance between said bounding boxes. The bounding boxes are used to describe the spatial location of the 3D objects. The distance between two 3D objects may be determined by building an octree within the bounding boxes. The octree may be used to locate the points which are closest to each other. The calculated minimal distance between the bounding boxes allows one to determine how close two 3D objects are from each other.

In one embodiment, the proximity between at least two 3D objects is determined by calculating a distance value between two points and comparing said value to a threshold. For example, if the calculated distance value is lower than the threshold, it means that the 3D objects are connected to each other.

In one embodiment, the unassigned points of the second digital map 20 are assigned to a partition based on their proximity with said partitions. For example, for each unassigned points, a minimal distance value from a partition may be calculated in order to associate the unassigned point within the closest partition.

### Second digital map - semantic identification

The method comprises a step of semantic identification SID. The step of semantic identification SID aims at determining to which class or classes belongs each 3D object or part of the 3D object identified during the step of segmentation SEG.

The classes to which the 3D objects are associated may be divided into several classes and subclasses. The classes may comprise the type of equipment represented by the 3D object, for example a pipe, a motor, a vessel, a valve, or a heat exchanger. The classes may also comprise a group of 3D objects or a group of 3D objects along with their connectivity. The classes may also comprise one or several classes for the points corresponding to objects which are not part of the facility. For example, some points of the second digital map 20 may be associated with classes for the surrounding elements such as walls, floor, or ceiling.

In one embodiment, each partition obtained by segmenting the second digital map 20 is associated with a class identified during the step of semantic identification SID.

In one embodiment, a partition is associated to a specific class based on a minimum percentage of points of the partition associated to said class. For example, if for a given partition, 90% of the points are associated to the class "pipe", then, said given partition is associated with the class "pipe".

In one embodiment, the step of segmentation SEG and the step of semantic identification SID are performed using the same learning function, for example the second learning function F₂.

In one embodiment, several points on the second digital map 20 are associated to the same class based on a criterion of proximity between the points. For example, a distance between a labeled point and a non-labeled point may be calculated and compared with a threshold. The class of a point is for example propagated to another point if the calculated distance value is inferior to the threshold.

### Connections between 3D objects

The method comprises a step of building connections between at least two 3D objects. The connections between two 3D objects are build based on a criterion of proximity between the two 3D objects.

In one embodiment, the method comprises a step of building connections between all 3D objects obtained by segmenting SEG the second digital map 20. The 3D objects may result directly from the partitioning of the second digital map 20. The 3D objects may also result from the merging of several partitions together.

In one embodiment, the connections between the 3D objects are built by propagating a skeleton through the points on the second digital map 20. The skeleton is for example propagated along the points of the second digital map 20 after the step of segmentation SEG and after the step of semantic identification SID. The skeleton may be built using the proximity of the 3D objects in the second digital map 20. For example, the skeleton may capture the topology from the second digital map 20 by creating a wireframe representation of the connectivity between 3D objects. The skeleton may consist in a line passing through all the 3D objects on the second digital map 20. The connectivity between the 3D objects on the second digital map 20 may be determined according to the passing of the skeleton. For example, two 3D objects may be connected together if the skeleton passes through said two 3D objects.

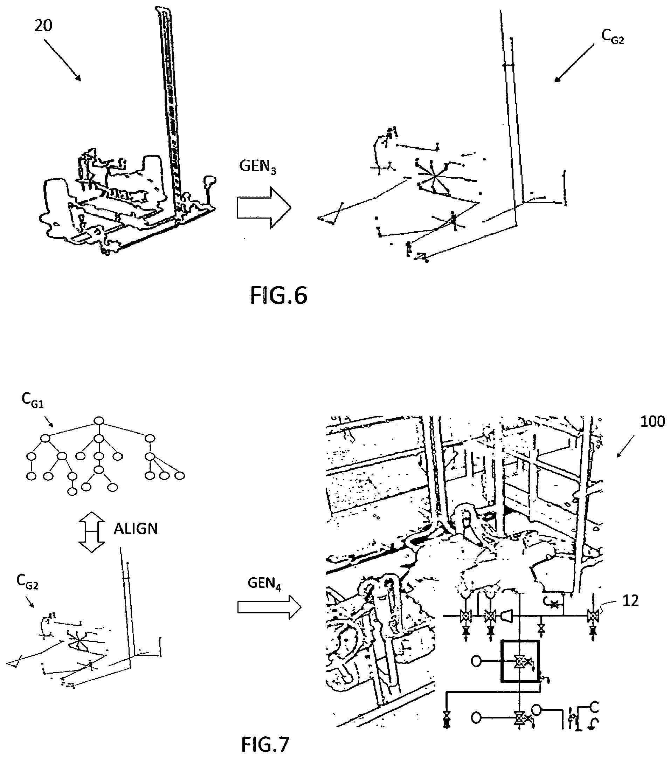

In reference to figure 6, the method comprises a step of generating GEN₃ a second connectivity graph C_{G2}. The second connectivity graph C_{G2} may comprise all the 3D objects and their connectivity.

In one embodiment, the second connectivity graph C_{G2} is generated according to the passing of the skeleton.

### Associating the symbols to the partition

The method comprises a step of associating ASSO₂ each symbol 11 identified on the first digital map 10 to at least one partition obtained during the step of segmentation SEG.

According to figure 7, the method comprises a step of automatically generating GEN₄ an augmented digital mapping 100 of the facility 101. The augmented digital mapping 100 of the facility 101 is obtained by aligning ALIGN the first connectivity graph C_{G1} and the second connectivity graph C_{G2}. During this step, aligning the two connectivity graphs allows for example to associate each node of the first connectivity graph C_{G1} with a node of the second connectivity graph C_{G2}.

In one embodiment, the alignment of the two connectivity graphs C_{G1}, C_{G2} is realized using a method implementing graph edit distance.

### SYSTEM

According to another aspect, the invention relates to a system 200 for automatically generating an augmented digital mapping of a facility 101. The system 200 comprises a device for receiving the first digital map 10 and for receiving the second digital map 20. The system comprises a calculator 210 to perform steps of the method according to any of the embodiments of the invention. The system may comprise a memory 212 to store data information associated to the received first digital map 10 or the received second digital map 20. The memory 212 may also store data resulting of the calculations perform by the calculator, such as the first data file D_{f1}, the first and second connectivity graph 10, 20 or the augmented digital mapping 100. The system may comprise a display device to display the augmented digital mapping 100 of the facility 101.

According to another aspect, the invention relates to a computer program comprising instructions which, when executed by a computer, leads it to execute steps of any of the embodiment of the method of the invention.

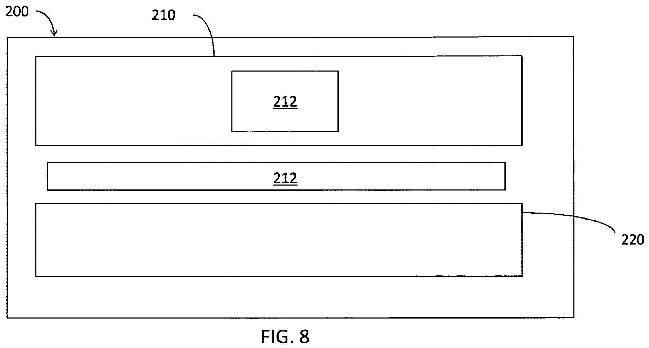

Figure 8 illustrates an example of hardware configuration of the system 200 of the invention.

The system 200 can be seen as a calculator interacting with a computer program. The system 200 may comprise a computer.

The system comprises a calculator 210. The calculator 210 comprises, for example, one or several processors adapted to interpret instructions in the form of computer programs. The processing may be executed by one processor sequentially or simultaneously, or according to another method, by one or several processors.

The calculator 210 may comprise a data processing module to perform calculations, a memory 212 connected to the data processing module, a computer readable medium and optionally a reader adapted to read the computer readable medium.

The system 200 may comprise an input module, an output module, and a communication interface.

Each function of the system 200 may be executed by making the data processing module to read a predetermined program on a material such as the memory 212, so that the data processing module executes calculations, commands communications to the communication interface and commands reading or writing data in the memory 212 and in the computer readable medium.

The method may be executed on one computer or on a distributed system between several computers (for example cloud computing).

The memory 212 is a computer readable storing medium and may be configured with, for example, a random-access memory or any other storage medium that would be adequate. The memory may comprise an operating system to load the program of the invention. The memory may comprise means for storing parameters variables created and modified during the execution of the precited program.

The instructions of the program may be stored on a computer readable storing support comprising, for example, a removable support, such as for example, and not limited to, a compact disc read only memory, a removable disc, a database, a server, or any other adapted storage support.

The instructions of the program may also come from an external source et be downloaded through a network. In that case, the program may comprise a computer readable data support on which are stored the instructions of the program or a data support on which are encoded the instructions of the program.

The system 200 may comprise a user interface 220 comprising an input device and an output device.

The input device 221 comprises for example a keyboard and a pointing interface such as a mouse.

The output device is adapted to return information to a user, electrically or sensory, for example visually or sonorously. The output device comprises for example a graphical user interface. The output interface may comprise the input device, for example in the case of a tablet.

The set of at least one communication interface allows communication between elements of the system 200 and optionally between at least one element of the system and one element external to the system 200. The set of at least one communication interface may establish a physical link or a wireless link between elements of the system 200 and/or between at least one element of the system 200 and at least one device external to the system 200.

To summarize, the invention relates to a computer implemented method, a system, and a computer program for generating an augmented digital mapping 100 of a facility 101 which has the advantage of providing a user with a lot of various information on the equipment of the facility 101.

## Claims

1. Computer implemented method for automatically generating an augmented digital mapping (100) of equipment of a facility (101), the method comprising:
▪ Receiving (REC₁) a first digital map (10) representing a diagram comprising a set of symbols representing equipments of the facility (101) and a set of graphical connections (13) being each connected by one end to at least one symbol (11) among said set of symbols;
▪ Detecting (D_{sym}) at least one symbol (11) on the first digital map (10) and using said at least one symbol (11) as an input of a first learning function (F₁) for classifying said at least one symbol (11) in a classifier;
▪ Detecting (Dₜₓₜ) at least one text sequence (12) proximate to the at least one symbol (11) detected on the first digital map (10) using a first image processing function (IPF₁) ;
▪ Detecting (D_{gc}) at least one graphical connection (13) connected by one end to at least one detected symbols (11) on the first digital map (10) using a second image processing function (IPF₂);
▪ Associating (ASSO₁) each symbol (11) with at least one detected text sequence (12) and with at least one detected graphical connection (13) when said connection exists;
▪ Generating (GEN₁) a first data file (Df₁) storing the classified symbols (11), their associated text sequences (12) and their associated graphical connections (13);
▪ Generating (GEN₂) a first connectivity graph (C_{G1}) from the data stored in the first data file (D_{f1});
▪ Receiving (REC₂) a second digital map (20) of the facility, said second digital map (20) comprising a 3D view of equipment of the facility (101) ;
▪ Segmenting (SEG) the second digital map (20) into partitions, each partition representing at least one part of at least one 3D object;
▪ Performing a step of semantic identification (SID) on the second digital map (20) to detect classes of the partitions using a second learning function (F₂) and associating (ASSO) each partition to a detected class using said second learning function (F2);
▪ Building connections between at least two 3D objects according to a criterion of proximity between said at least two 3D objects;
▪ Generating (GEN₃) a second connectivity graph (C_{G2}) comprising all the partitions and their connectivity;
▪ Associating (ASSO₂) each symbol (11) identified on the first digital map (10) to at least one partition;
▪ Automatically generating (GEN₄) an augmented digital mapping (100) of equipment of the facility (101) by using a function of graph alignment to align (ALIGN) the first connectivity graph (C_{G1}) and the second connectivity graph (C_{G2}).

2. The method according to claim 1 wherein the first digital map (10) comprises a Process and Instrumentation Diagram (P_{ID}) and wherein at least one graphical connection (13) represents a pipe and said at list one graphical connection (13):
▪ connects one symbol (11) with another symbol (11) and/or;
▪ is connected with another graphical connection (13) to form a node.

3. The method according to any of the previous claims wherein at least one text sequence (12) is automatically associated with at least one symbol (11) according to a first predefined configuration based on a parameter of a minimal distance separating said at least one symbol (11) from said at least one text sequence (12).

4. The method according to any of the previous claims wherein at least one text sequence (12) is automatically associated with one symbol (11) according to a second predefined configuration based on a parameter of position of the text sequence (12) relative to said symbol (11).

5. The method according to any of the previous claims wherein the first image processing function (IPF₁) is an optical character recognition function and wherein the second image processing function (IPF₂) allows identifying parts of the first digital map (10) that match at least one template.

6. The method according to any of the previous claims wherein the first learning function (F₁) comprises a neural network trained by a few-shots learning method.

7. The method according to any of the previous claims wherein:
▪ the second digital map (20) comprises a point cloud (P_{c}) from a three-dimensional laser scan and;
▪ each 3D object represents an equipment of the facility (101) and;
▪ the connection between at least two 3D objects are obtained by building a skeleton through several points of said point cloud (P_{cd}) .

8. The method according to any of the previous claims wherein the second learning function (F₂) comprises a convolutional neural network trained by a supervised method and wherein the second digital map (20) is automatically segmented into partitions using said second learning function (F₂).

9. The method according to any of the previous steps wherein the second digital map (20) is automatically postprocessed in order to identify additional points that belong to at least one segmented partition.

10. The method according to any of the previous claims wherein a value of similarity between the first connectivity graph (C_{G1}) and the second connectivity graph (C_{G2}) is automatically measured using a method implementing graph edit distance.

11. System (200) for automatically generating an augmented digital mapping (100) of a facility (101) comprising a device for receiving (REC₁) a first digital map (10) representing a diagram of the facility (101), said first digital map (10) comprising a set of symbols (11) representing equipments of the facility (101) and a set of graphical connections (13) being connected by one end to at least one symbol (11) and for receiving (REC₂) a second digital map (20) representing at least one 3D object of the facility (101) and said system comprising at least one memory (212) for storing data, a user interface (220) and at least one calculator (210) configured for:
▪ Detecting at least one symbol (11) on the first digital map (10) and using said at least one symbol (11) as an input of a first learning function (F₁) in order to classify said at least one symbol (11) in a classifier;
▪ Detecting at least one text sequence (12) proximate to the at least one symbol (11) detected on the first digital map (10) using a first image processing function (IPF₁);
▪ Detecting at least one graphical connection (13) connected by one end to at least one detected symbols (11) on the first digital map (10) using a second image processing function (IPF₂);
▪ Associating each symbol (11) with at least one detected text sequence (12) and with at least one detected graphical connection (13) when said connection exists;
▪ Generating (GEN₁) a first data file (D_{f1}) storing the classified symbols (11), their associated text sequences (12) and their associated graphical connections (13);
▪ Generating (GEN₂) a first connectivity graph (C_{G1}) based on the data stored in the first data file (D_{f1});
▪ Segmenting (SEG) the second digital map (20) into partitions, each partition representing at least one part of at least one 3D object
▪ Performing a step of semantic identification (SID) on the second digital map (20) to detect classes of the partitions using a second learning function (F₂) and associating each partition to a detected class using said second learning function (F₂);
▪ Building connections between at least two 3D objects according to a criterion of proximity between said at least two 3D objects;
▪ Generating a second connectivity graph (CG2) comprising all the partitions their connectivity;
▪ Associating each symbol (11) identified on the first digital map (10) to at least one partition obtained by segmenting the second digital map (20),
▪ Automatically generating an augmented digital mapping (100) of the facility (101) by using a function of graph alignment to align (ALIGN) the first connectivity graph (C_{G1}) and the second connectivity graph (CG2).

12. A computer program comprising instructions which, when the program is executed by a computer, cause the computer to carry out any of the steps of the method according to claim 1 to 10.
